# EUROPÄISCHE PATENTSCHRIFT

(11) **EP 1 198 103 B1**
(45) Veröffentlichungstag und Bekanntmachung des Hinweises auf die Patenterteilung: **09.11.2011**
(21) Anmeldenummer: 01121310.5
(22) Anmeldetag: 06.09.2001
(51) Int. Cl.: H04L 29/06, G06F 13/38

(54) **Verfahren zur Adaption von Bussystemen**
Method for adapting between bus systems
Procédé d'adaptation de systèmes de bus

(30) Priorität: 11.09.2000 DE 10044818
(43) Veröffentlichungstag der Anmeldung: 17.04.2002
(73) Patentinhaber: Volkswagen AG, 38436 Wolfsburg (DE)
(72) Erfinder: Hallas, Ernst, Dr., 91301 Forchheim (DE)
(74) Vertreter: Meyer, Enno

(56) Entgegenhaltungen:
- WO-A-01/63847
- DE-A- 19 819 569
- US-A- 5 499 109
- US-A- 6 115 771

## Beschreibung

Die Erfindung bezieht sich auf ein Verfahren zur Adaption unterschiedlicher Bussysteme sowie ein Gateway zur Adaption unterschiedlicher Bussysteme.

Heutzutage ist es durchaus Stand der Technik, unterschiedliche Geräte an einen Bus anzukoppeln. Voraussetzung hierfür ist jedoch, daß das anzukoppelnde Gerät auf die Datenübertragung und das Protokoll des Busses, an welchen es angeschlossen wird, angepaßt ist. Hierzu sind unterschiedliche Interfaces bekannt, welche in ein Gerät eingebaut werden, wobei jeweils ein Interface für einen speziellen Bus vorgesehen ist.

Im weiteren ist durch aus bekannt, daß Geräte, die an einem Bus angeschlossen sind, über unterschiedliche Befehlssätze verfügen. Der Busmaster fragt von jedem Gerät die Befehlssätze ab und bindet die Geräte, entsprechend den Befehlssätzen, in das Bussystem ein.

Problematisch ist es aber, wenn in einem größeren System, wie beispielsweise in einem Kraftfahrzeug, mehrere unterschiedliche Bussysteme parallel installiert sind. Diese Busse können nicht miteinander gekoppelt werden, ein Datenaustausch zwischen den einzelnen Bussystemen ist nur schwer möglich.

Es besteht jedoch die Möglichkeit, in einen Bus, dessen Struktur und Datensatz bekannt ist, ein entsprechendes Interface, für einen zweiten Bus, dessen Struktur und Befehlssatz ebenfalls bekannt ist, einzubauen und dementsprechend anzukoppeln. Hierbei ist jedoch dann Voraussetzung, daß die Datenstruktur und die Eigenschaften beider Bussysteme bekannt sind. Das Dokument DE19819569 offenbart einen elektronischen Schaltkreis für die Umwandlung von Daten, insbesondere in der Telekommunikationstechnik, mit wenigstens einem programmierbaren Miniprozessor, einem Programm- und Datenspeicher, welcher dem Miniprozessor zugeordnet ist, und einem Bus-Controller, welcher den Datentransfer zwischen dem Miniprozessor und einem externen Datenbus steuert, wobei der Miniprozessor, der Programm- und Datenspeicher und der Bus-Controller auf einem ASIC (Anwendungsspezifischer IC) integriert sind.

Das Dokument W09950754 offenbart eine Umwandlungsvorrichtung für die Kopplung von einem Host-Computer mit einem Peripheriegerät, wobei die Umwandlungsvorrichtung SCSI Command Descriptor Blocks (CDB) in Advanced Technology Attachment (ATA) Befehle, Daten und Zustände über eine ATA Schnittstelle durch eine Zwischenstufe umwandelt.

Das Dokument W09522865 offenbart ein Verfahren für ein Faxgerät zur Ermittlung des geeigneten Verfahrens zur Umwandlung von in eine Nachricht enthaltenen Daten mittels eines Formatauflösungsmodul.

Das Dokument WO0163847 offenbart eine automatisierte Router-Port-Erweiterung, um Wide Area Network Zugriff auf mehrere Benutzer zu bieten.

Aufgabe der Erfindung ist es, ein universelles Verfahren anzugeben, welches es ermöglicht, zwei unterschiedliche Bussysteme miteinander zu koppeln, ohne die exakte Struktur und Befehlssätze der Bussysteme zu kennen. Im weiteren wird eine Vorrichtung vorgeschlagen, welche es ebenfalls ermöglicht, zwei Bussysteme miteinander zu koppeln, ohne deren exakten Eigenschaften vorab zu kennen.

Diese Aufgabe wird anhand der Merkmale der Ansprüche 1 und 5 gelöst.

Die Erfindung geht von der Überlegung aus, daß unterschiedliche Bussysteme zunächst unterschiedliche Datensätze, Befehlssätze und sonstige Strukturen haben. Ein Koppeln von unterschiedlichen Bussystemen kann nur dadurch erfolgen, daß die Daten des einen Bussystems in das andere Bussystem eingebracht werden und umgekehrt. Dies hat zur Folge, daß die Daten und Befehlssätze des einen Bussystems auf das andere Bussystem umgesetzt werden müßten. Im weiteren wird von der Überlegung ausgegangen, daß die Bussysteme unterschiedliche Mächtigkeit in ihren Befehlssätzen und ihren Datenübertragungsraten haben. So kann es zum einen bedeuten, daß das eine Bussystem eine Teilmenge des zweiten Bussystems darstellt oder aber daß das eine Bussystem auch einen komplett anderen Befehlsumfang als das andere Bussystem aufweist.

Im Fall, daß die Bussysteme in der Art aufgebaut sind, daß das eine Bussystem eine Teilmächtigkeit des zweiten Bussystems aufweist so arbeitet das Verfahren wie folgt:
Das Bussystem mit größerer Mächtigkeit weist ein Gateway mit einem Sensor auf, über welchen es feststellt, ob das angekoppelte Bussystem denselben Befehlssatz aufweist. Ist dies der Fall, so muß keine Konversion erfolgen, die Daten können direkt, unter Beachtung der Zeittakte, in das Bussystem eingefügt werden. Sollen Daten aber aus dem mächtigeren Bussystem in das weniger mächtige übergeführt werden, so können nur diese Daten verwendet werden, welche im zweiten Bussystem auch übertragen werden können. Daher ist im Interface ein Speicher angeordnet in welchem sämtliche Befehlssätze aller bekannten Bussysteme abgelegt sind. Zu jedem bekannten Bussystem sind dessen physikalischen Eigenschaften, wie Bustakt usw. gespeichert. Über den Sensor erkennt das Gateway, um welche Busstruktur es sich handelt und paßt die Daten des mächtigeren Bussystems an die Daten des angekoppelten Bussystems an.

Im Falle, daß das Bussystem mit dem Gateway und das angekoppelte Bussystem unterschiedliche Befehlssätze aufweisen, arbeitet das Verfahren wie folgt:
Das Bussystem mit dem Gateway analysiert mittels des Sensors die Daten und
die Signale des anderen Bussystems. Er vergleicht die empfangen Daten/Signale mit den im Speicher gespeicherten Daten und ermittelt so das entsprechende Bussystem. Anschließend wählt es die im Speicher vorhandenen Daten zum erkannten Bussystem aus und wandelt die empfangenen Daten anhand dieser Daten in Daten für das Bussystem um und speist diese in das Bussystem ein. Auf diese Weise können zwei unterschiedliche Bussysteme gekoppelt werden und die Daten austauschen.
Das Gateway wandelt die Daten der zu koppelnden Bussysteme anhand der im Speicher abgelegten Daten und Werte vom jeweils einen Bussystem in das andere um..

Im weiteren wird das Verfahren anhand von nachfolgenden Figuren näher beschrieben.

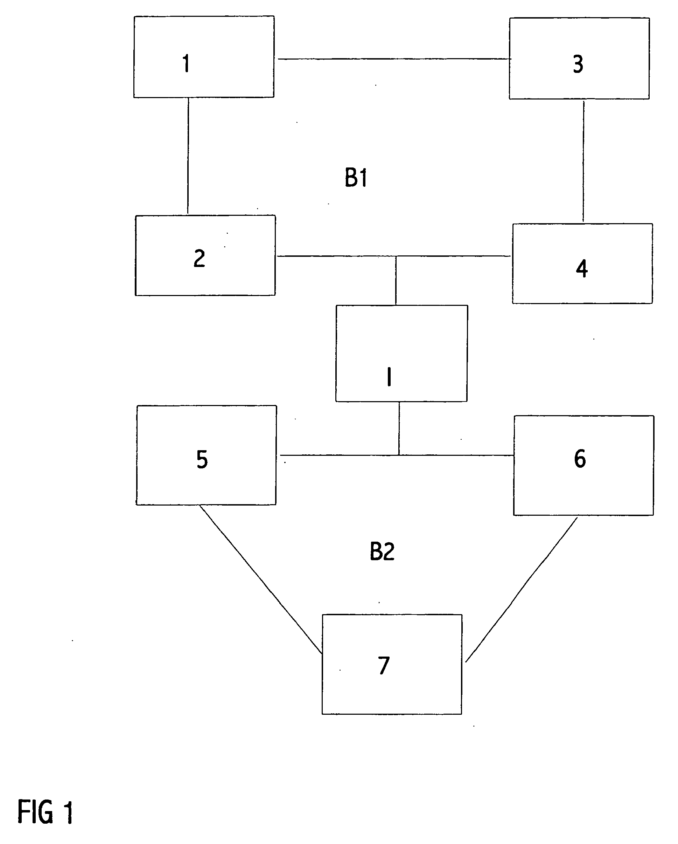

Es zeigt Figur 1, einen schematischen Aufbau eines ersten Bussystems und eines zweiten Bussystems, welche über ein Gateway gekoppelt werden.

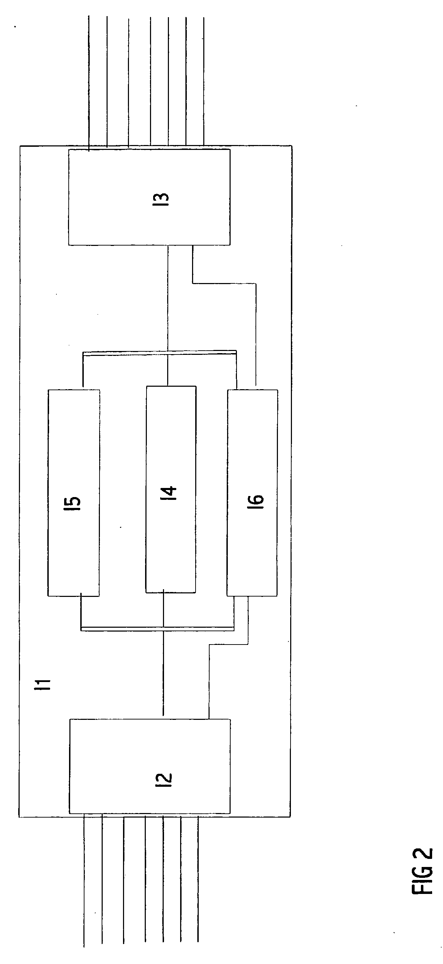

Figur 2 zeigt den Aufbau eines Gateways zur Kopplung der Bussysteme.

Das Bussystem B1 besteht aus mehreren Komponenten 1, 2, 3, 4. Diese Komponenten tauschen über den Bus B1 ihre Daten aus. Das Bussystem B2 weist die Komponenten 6, 7, 8 auf. Diese Komponenten 6, 7, 8 tauschen ihre Daten auf den Bus B2 aus. Im weiteren ist ein Gateway I vorgesehen, welches den Bus B1 mit dem Bus B2 koppelt. Das Gateway 1 weist einen Sensor auf, welcher die Daten der einzelnen Bussysteme B1, B2 analysiert. Im weiteren prüft er ab, ob ein Gerät Daten anbietet oder anfordert, welches in einem der beiden Bussysteme ein Antwortgerät aufweist. Im weiteren analysiert dieser Sensor, ob Daten im einen Bussystem B1 den Daten im anderen Bussystem B2 entsprechen, oder ob eine total unterschiedliche Datenstruktur vorliegt, welche nur in dem weniger mächtigen Bussystem lesbar, steuerbar, eingebbar sind. Ist dies der Fall, so agiert das Gateway I in Form einer Datenpumpe und fügt die betreffenden Daten, ohne jegliche Beeinflussung, in das betreffenden Bussystem ein. Hierbei paßt es die Daten an das entsprechende Busprotokoll an und fügt die Daten an den entsprechenden noch vorhandenen Freistellen im Busprotokoll ein. Hierbei erfolgt keine Änderung des Inhalts, der Bedeutung oder des Umfangs der Daten sowie der Zeitstruktur der Daten- und Kommunikationsstruktur. Faktisch wird eine Simulation eines passiven Busknotens des anderen Systems vorgenommen.

Zur besseren Verdeutlichung der Erfindung wird angenommen, daß es sich bei dem Bussystem B1 um ein Fire-Wire-Bus und beim Bussystem B2 um einen CAN-Bus handelt. Beide Busse können nicht miteinander kommunizieren, da unterschiedliche Datenformate und Busprotokolle vorliegen.

Im CAN-Bus B2 wird die Motortemperatur über die Einheit 5 gemessen und im CAN-BUS B2 übermittelt. Am FIRE-WIRE-Bus B1 ist eine Anzeigeeinheit 1 angeschlossen, auf welcher die Temperatur des Motors dargestellt werden soll. Die Temperaturdaten werden von dem Temperaturfühler, der Einheit 5, erfaßt und auf den CAN-Bus B2 gelegt. Das Gateway I analysiert über seinen Sensor die Daten des CAN-Busses B2 und erkennt dessen Datenstruktur. Hieraus ermittelt es, daß die Daten des CAN-Busses B2 und dessen Befehlsumfang weniger mächtig ist als die des Fire-Wire-Busses B1. Es analysiert in seinem Speicher, ob eine bekannte Datenstruktur vorliegt. Die Daten des CAN-Busses B2 sind dort abgelegt und anhand dieser Daten analysiert das Gateway I die empfangenen Daten das CAN-Busses B2. Zugleich analysiert das Gateway I Daten aus CAN-Bus B2 ermittelt und in den FIRE-WIRE-Bus B1 übertragen werden sollen. Diese Daten werden dann aus dem CAN-Bus B2 anhand der im Speicher gespeicherten Daten herausgefiltert und über das Gateway I in den Fire-Wire-Bus B2 in dessen Busprotokoll in angepaßter Weise eingefügt.

Auf diese Weise kann nunmehr die Anzeigeeinheit 1 die Daten des aus dem CAN-Bus B2 empfangen und darstellen.

Das Gateway I besteht aus den Interfaceanschlüssen I2, I3 sowie einer Speichereinheit I5 und einer Mikrocomputereinheit I4 und einen Datensensor I6. Über die Interfaceanschlüsse I2, I3 sind die zwei unterschiedlichen Busse gekoppelt. Die Mikrocomputereinheit I4 steuert den Datensensor I6, welcher die eingehenden Daten über die Interfaceanschlüsse I2, I3 analysiert und mit im Speicher I5 abgelegten Daten und bekannten Datenprotokollen und Busprotokollen vergleicht. Hat der Datensensor I6 die am Interfaceanschluß I3 und I2 anliegenden Daten erkannt und richtig in der Speichereinheit I5 zugewiesen, so werden die über den Interfaceanschluss I3 empfangenen Daten auf das über den Interfaceanschluss I2 zu empfangenden Datenprotokolle umgesetzt und über den Interfaceanschluss I2 in das entsprechende Bussystem abgesendet. Zugleich werden die über den Interfaceanschluss I2 empfangenen Daten auf den Bus, welcher an den interfaceanschluss I3 angeschlossen ist umgesetzt und über den Interfaceanschluss I3 in diesen angeschlossenen Bus eingespeist.

## Patentansprüche

1. Verfahren zur Adaption von mindestens zwei Bussystemen wobei ein erstes Bussystem (B1) ein Gateway (I) aufweist, über welches mindestens ein zweites Bussystem (B2) angekoppelt werden kann, **dadurch** genkennzeichnet, dass das Gateway (I) über einen Datensensor (I6) ermittelt, ob das zweite Bussystem (B2) einen unterschiedlichen Befehlssatz zum ersten Bussystem (B1) aufweist, und
bei Vorliegen eines nicht unterschiedlichen Befehlssatzes überprüft, ob das erste Bussystem (B1) in seinem Befehlssatz mächtiger ist als das zweite Bussystem (B2) und in diesem Fall nur Daten und Befehlssätze vom ersten Bussystem (B1) in das zweite Bussystem (B2) überträgt, welche im zweiten Bussystem (B2) bekannt sind und die Übertragungsdatenrate und das Datenprotokoll an das zweite Bussystem (B2) anpasst und sämtliche Daten des zweiten Bussystems (B2) in das erste Bussystem (B1) überträgt und auf die Datenübertragungsrate und das Datenprotokoll des ersten Bussystems (B1) anpasst, und
bei Vorliegen eines unterschiedlichen Befehlssatzes überprüft, ob das erste Bussystem (B1) in seinem Befehlssatz mächtiger ist als das zweite Bussystem (B2) und der Datensensor (I6) die Daten des zweiten Bussystems (B2) mit in einer Speichereinheit (I5) gespeicherten Daten zu bekannten Bussystemen vergleicht und im Falle eines positiven Vergleiches die Daten vom ersten Bussystem (B1) in das Daten- und Protokollformat des zweiten Bussystems (B2) wandelt und in das zweite Bussystem (B2) überträgt, und Daten des zweiten Bussystems (B2) in das Daten- und Protokollformat des ersten Bussystems (B1) wandelt und in das erste Bussystem (B1) überträgt.

2. Verfahren nach Anspruch 1,
**dadurch gekennzeichnet, dass**
es sich bei den Bussystemen (B1, B2) um eine MOST-Bussystem, eine Fire-Wire-Bussystem oder ein CAN-Bussystem handelt.

3. Verfahren nach Anspruch 1 oder 2,
**dadurch gekennzeichnet, dass**
das Gateway (I) als Datenpumpe betreibbar ist und die Daten des ersten Bussystems (B1) in das zweite Bussystem (B2) einfügt ohne Veränderung des Inhaltes der Daten und/oder die Daten des zweiten Bussystems (B2) in das erste Bussystem (B1) einfügt ohne Veränderung des Inhaltes der Daten.

4. Verfahren nach einem oder mehreren der Ansprüche 1 bis 3,
**dadurch gekennzeichnet, dass**
über das Gateway (I) Befehle von einer im ersten Bussystem (B1) angeordneten Einheit (1, 2, 3, 4) an eine im zweiten Bussystem (B2) angeordneten Einheit (5, 6, 7) geleitet werden und das die entsprechende Einheit (5, 6, 7) auf Befehle der Einheit (1, 2, 3, 4) im ersten Bussystem (B1) über das Gateway (I) antwortet.

5. Gateway (1 zur Durchführung des Verfahrens nach einem der Ansprüche 1 bis 4, **dadurch gekennzeichnet, dass**
das Gateway (I) mindestens zwei Interfaceanschlüsse (I2, I3), eine Mikrocomputereinheit (I4), eine Speichereinheit (I5) und einen Datensensor (I6) zur Analyse der an den Interfaceanschlüssen eingehenden Daten und zum Vergleich mit in der Speichereinheit (I5) abgelegten Daten, bekannten Datenprotokollen und Busprotokollen aufweist.

## Claims

1. Method for adapting at least two bus systems, wherein a first bus system (B1) has a gateway (I) which can be used to couple at least one second bus system (B2), **characterized in that** the gateway (I) uses a data sensor (I6) to ascertain whether the second bus system (B2) has a different instruction set from the first bus system (B1) and,
if an instruction set which is not different is present, checks whether the first bus system (B1) has a more powerful instruction set than the second bus system (B2) and in this case transmits only data and instruction sets from the first system (B1) to the second bus system (B2) which are known in the second bus system (B2) and matches the transmission data rate and the data protocol to the second bus system (B2) and transmits all the data from the second bus system (B2) to the first bus system (B1 and matches said data to the data transmission rate and the data protocol of the first bus system (B1), and,
if a different instruction set is present, checks whether the first bus system (B1) has a more powerful instruction set than the second bus system (B2), and the data sensor (I6) compares the data from the second
bus system (B2) with data stored in a memory unit (I5) which relate to known bus systems and, in the event of a positive comparison, converts the data from the first bus system (B1) to the data and protocol format of the second bus system (B2) and transmits said data to the second bus system (B2), and converts data from the second bus system (B2) into the data and protocol format of the first bus system (B1) and transmits said data to the first bus system (B1).

2. Method according to Claim 1,
**characterized in that**
the bus systems (B1, B2) are a MOST bus system, a Firewire bus system or a CAN bus system.

3. Method according to Claim 1 or 2,
**characterized in that**
the gateway (I) can be operated as a data pump and inserts the data from the first bus system (81) into the second bus system (82) without altering the content of the data and/or inserts the data from the second bus system (B2) into the first bus system (81) without altering the content of the data.

4. Method according to one or more of Claims 1 to 3, **characterized in that**
the gateway (I) is used to route instructions from a unit (1, 2, 3, 4) which is arranged in the first bus system (B1) to a unit (5, 6, 7) which is arranged in the second bus system (B2), and the relevant unit (5, 6, 7) responds to instructions from the unit (1, 2, 3, 4) in the first bus system (B1) via the gateway (I).

5. Gateway (I) for carrying out the method according to one of Claims 1 to 4,
**characterized in that**
the gateway (I) has at least two interface connections (I2, I3), a microcomputer unit (I4), a memory unit (I5) and a data sensor (I6) for analysing the data incoming on the interface connections and for comparing said data with data stored in the memory unit (I5), known data protocols and bus protocols.

## Revendications

1. Procédé pour l'adaptation d'au moins deux bus systèmes, dans lequel un premier bus système (B1 comporte une passerelle (I) par l'intermédiaire de laquelle au moins un second bus système (B2) peut être raccordé, **caractérisé en ce que** la passerelle (I) détermine au moyen d'un capteur de données (I6) si le second bus système (B2) possède un jeu d'instructions différent de celui du premier bus système (B1), et
**en ce qu'**en présence d'un jeu d'instructions non différent, il est testé si le premier bus système (B1) possède un jeu d'instructions de plus grande capacité que le second bus système (B2), lors de quoi seuls sont transmis dans le second bus système (B2) les données et les jeux d'instructions du premier bus système (B1) qui sont connus du second bus système (82) et le débit de transmission de données et le protocole de données sont adaptés au second bus système (B2) et la totalité des données du second bus système (B2) sont transmises dans le premier bus système (B1) et sont adaptées au débit de transmission de données et au protocole de données du premier bus système (B1), et
**en ce qu'**en présence d'un jeu d'instructions différent, il est testé si le premier bus système (B1) possède un jeu d'instructions de plus grande capacité que le second bus système (82) et le capteur de données (I6) compare les données du second bus système (B2), au moyen de données mémorisées dans une unité à mémoire (I5) à des bus systèmes connus et, dans le cas d'une comparaison positive, convertit les données du premier bus système (B1) en un format de données et de protocole du second bus système (82) et les transmet dans le second bus système (B2), et convertit les données du second bus système (B2) au format de données et de protocole du premier bus système (B1) et les transmet dans le premier bus système (B1).

2. Procédé selon la revendication 1,
**caractérisé en ce que**
les bus systèmes (B1, B2) sont un bus système MOST, un bus système Fire-Wire ou un bus système CAN.

3. Procédé selon la revendication 1 ou 2, **caractérisé en ce que**
la passerelle (I) peut être mise en fonctionnement en tant que pompe de données et **en ce qu'**elle injecte les données du premier bus système (B1) dans le second bus système (B2) sans modification du contenu des données et/ou **en ce qu'**elle injecte les données du second bus système (B2) dans le premier bus système (B1) sans modification du contenu des données.

4. Procédé selon l'une ou plusieurs des revendications 1 à 3,
**caractérisé en ce que**
des instructions d'une unité (1, 2, 3, 4) disposée dans le premier bus système (B1) sont acheminées par l'intermédiaire de la passerelle (I) à une unité correspondante (5, 6, 7) disposée dans le second bus système (B2) et **en ce que** l'unité correspondante (5, 6, 7) répond à des instructions de l'unité (1, 2, 3, 4) du premier bus système (B1) par l'intermédiaire de la passerelle (I).

5. Passerelle (I) destinée à mettre en oeuvre le procédé selon l'une des revendications 1 à 4, **caractérisée en ce que**
la passerelle (I) comprend au moins deux connexions d'interface (I2, I3), une unité à microcalculateur (I4), une unité à mémoire (I5) et un capteur de données (I6) pour l'analyse des données d'entrée de la connexion d'interface et pour la comparaison, à l'aide de données stockées dans l'unité à mémoire (I5) de protocoles de données et de protocoles de bus connus.
